# EUROPÄISCHE PATENTSCHRIFT

(11) **EP 2 816 433 B1**
(45) Veröffentlichungstag und Bekanntmachung des Hinweises auf die Patenterteilung: **21.10.2020**
(21) Anmeldenummer: 14169402.6
(22) Anmeldetag: 22.05.2014
(51) Int. Cl.: G05D 1/02, B60S 1/54, B60S 1/02, G02B 27/00

(54) **Bearbeitungsmaschine zur autonomen Bearbeitung eines zugeordneten Arbeitsbereichs**
Processing machine for autonomous processing of dedicated working range
Machine de traitement pour le traitement autonome d'une zone de travail attribuée

(30) Priorität: 18.06.2013 DE 102013211339; 06.03.2014 DE 102014204091
(43) Veröffentlichungstag der Anmeldung: 24.12.2014
(73) Patentinhaber: Robert Bosch GmbH, 70442 Stuttgart (DE)
(72) Erfinder: Biber, Peter, 72119 Poltringen (DE); Petereit, Steffen, 71691 Freiberg A. N. (DE)

(56) Entgegenhaltungen:
- EP-A2- 2 227 945
- CN-A- 102 081 232
- DE-A1- 10 012 004
- DE-A1- 10 225 151
- GB-A- 2 369 511
- US-A1- 2003 155 001

## Beschreibung

### Stand der Technik

Die vorliegende Erfindung betrifft eine Bearbeitungsmaschine zur autonomen Bearbeitung eines zugeordneten Arbeitsbereichs, mit einer Erfassungseinheit zur Erfassung von jeweils aktuellen Umgebungsparametern, die zur Steuerung der Bearbeitungsmaschine im zugeordneten Arbeitsbereich auswertbar sind.

Aus dem Stand der Technik ist eine derartige, z.B. nach Art eines Mähroboters bzw. eines autonomen Rasenmähers ausgebildete Bearbeitungsmaschine zur autonomen Bearbeitung eines zugeordneten Arbeitsbereichs, z.B. einer Rasenfläche, bekannt. Dieser autonome Rasenmäher ist mit einer nach Art einer Kamera ausgebildeten Erfassungseinheit versehen, mit der im Betrieb des autonomen Rasenmähers jeweils aktuelle Umgebungsparameter erfasst werden, die auswertbar sind, um eine geeignete Steuerung des autonomen Rasenmähers z.B. zur Navigation auf der Rasenfläche zu ermöglichen. Ferner ist aus der GB 2 369 511 A eine derartige Bearbeitungsmaschine in Form eines autonomen Staubsaugers bekannt.

Nachteilig am Stand der Technik ist, dass im Betrieb eines derartigen, autonomen Rasenmähers eine betriebsbedingte Verschmutzung und/oder ein Beschlagen der Kamera und/oder eine Kondensatbildung an der Kamera zu einer Einschränkung der Funktionalität der Kamera führen können. Eine derartige Einschränkung kann zu einer eingeschränkten und fehlerhaften Erfassung der jeweils aktuellen Umgebungsparameter führen und somit zu einer unpräzisen und inkorrekten Steuerung des autonomen Rasenmähers.

### Offenbarung der Erfindung

Eine Aufgabe der Erfindung ist es daher, eine neue Bearbeitungsmaschine zur autonomen Bearbeitung eines zugeordneten Arbeitsbereichs bereitzustellen, die eine Erfassungseinheit aufweist, mit der jeweils aktuelle Umgebungsparameter sicher und zuverlässig erfasst werden können.

Dieses Problem wird gelöst durch eine Bearbeitungsmaschine zur autonomen Bearbeitung eines zugeordneten Arbeitsbereichs, mit einer Erfassungseinheit zur Erfassung von jeweils aktuellen Umgebungsparametern, die zur Steuerung der Bearbeitungsmaschine im zugeordneten Arbeitsbereich auswertbar sind. Der Erfassungseinheit ist eine Freihalteeinrichtung zugeordnet, die zumindest dazu ausgebildet ist, im autonomen Betrieb der Bearbeitungsmaschine eine betriebsbedingte Verschmutzung und/oder ein Beschlagen der Erfassungseinheit und/oder eine Kondensatbildung an der Erfassungseinheit zumindest zu reduzieren.

Die Erfindung ermöglicht somit die Bereitstellung einer Bearbeitungsmaschine zur autonomen Bearbeitung eines zugeordneten Arbeitsbereichs, bei der eine betriebsbedingte Verschmutzung und/oder ein Beschlagen einer zugeordneten Erfassungseinheit und/oder eine Kondensatbildung an der Erfassungseinheit im Betrieb der Bearbeitungsmaschine durch eine Verwendung der Freihalteeinrichtung auf einfache Art und Weise zumindest im Wesentlichen sicher und zuverlässig verhindert werden können.

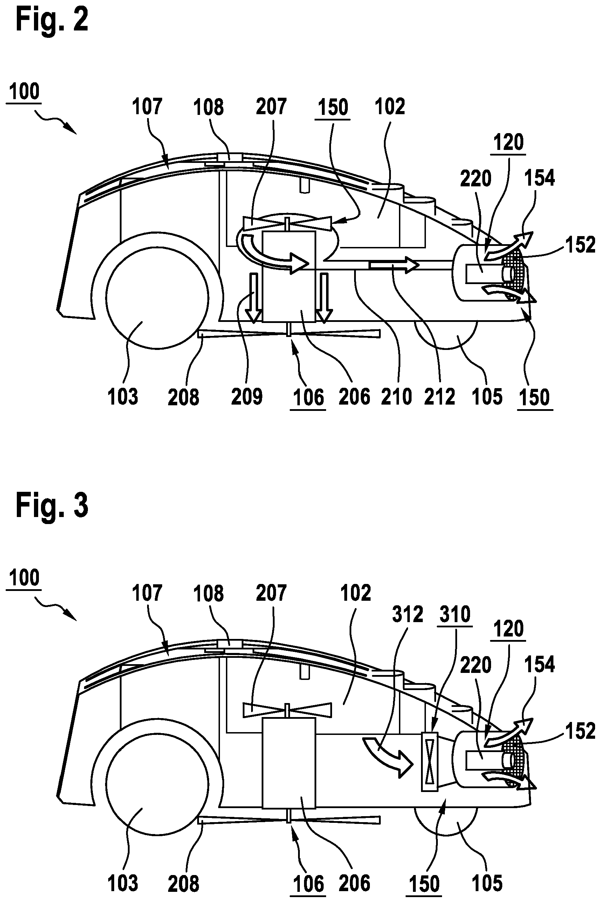

Die Erfindung ist in Anspruch 1 angegeben. Lediglich die in den Figuren 2, 4, 5 und 7 dargestellten Ausführungsformen der Erzeugung des der Erfassungseinheit zugeleiteten Luftstromes stellen Ausführungsbeispiele der gegenwärtig beanspruchten Erfindung dar. Alle weiteren Erwähnungen des Wortes "Ausführungsform" beziehen sich auf Beispiele, die ursprünglich angemeldet wurden, die aber keine Verkörperungen der gegenwärtig beanspruchten Erfindung darstellen; diese Beispiele werden weiterhin nur zur allgemeinen Veranschaulichung gezeigt.

Gemäß einer Ausführungsform weist die Erfassungseinheit mindestens eine Kamera und/oder mindestens einen optischen Sensor auf.

Somit kann die Bereitstellung einer robusten und stabilen Erfassungseinheit ermöglicht werden.

Die Umgebungsparameter weisen bevorzugt Lokalisierungs-, Arbeitsflächenerkennungs- und/oder Untergrunderkennungsparameter auf.

Somit können auf einfache Art und Weise Navigationsdaten und/oder geeignete Arbeitsflächen- bzw. Untergrundspezifische Bearbeitungsdaten zur Steuerung der Bearbeitungsmaschine bestimmt werden.

Gemäß einer Ausführungsform weist die Freihalteeinrichtung mindestens eine Luftleiteinrichtung auf, der zumindest im autonomen Betrieb der Bearbeitungsmaschine ein Luftstrom zugeführt wird. Die Luftleiteinrichtung ist dazu ausgebildet, den zugeführten Luftstrom zumindest teilweise in Richtung der Erfassungseinheit zu leiten.

Die Erfindung ermöglicht somit die Bereitstellung einer Bearbeitungsmaschine mit einer einfachen und unkomplizierten Freihalteeinrichtung.

Bevorzugt ist der zumindest teilweise in Richtung der Erfassungseinheit geleitete Luftstrom zumindest dazu ausgebildet, ein Festsetzen von Schmutz- und/oder Wasserpartikeln auf der Erfassungseinheit zumindest im Wesentlichen zu verhindern und/oder die Erfassungseinheit zumindest abschnittsweise zu kühlen.

Somit kann ein Festsetzen von Schmutz- und/oder Wasserpartikeln auf der Erfassungseinheit sicher und zuverlässig verhindert werden. Darüber hinaus kann eine effiziente Kühlung der Erfassungseinheit ermöglicht werden.

Gemäß einer Ausführungsform weist die Freihalteeinrichtung mindestens ein Lüfterrad zur Erzeugung des zugeführten Luftstroms auf.

Somit kann der zugeführte Luftstrom auf einfache Art und Weise erzeugt werden.

Bevorzugt ist zum Antrieb im autonomen Betrieb der Bearbeitungsmaschine ein Antriebsmotor vorgesehen, dem zur Motorkühlung mindestens ein Lüfterrad zugeordnet ist, das dazu ausgebildet ist, den zugeführten Luftstrom zumindest teilweise zu erzeugen.

Somit kann ein bereits als integraler Bestandteil der Bearbeitungsmaschine vorgesehenes Lüfterrad zur Erzeugung des zugeführten Luftstroms Anwendung finden, sodass eine Bauraum- und Ressourcensparende Umsetzung der vorliegenden Erfindung ermöglicht wird.

Gemäß einer Ausführungsform ist zur Stromversorgung im autonomen Betrieb der Bearbeitungsmaschine mindestens ein Akkupack vorgesehen, dem zur Kühlung mindestens ein Lüfterrad zugeordnet ist, das dazu ausgebildet ist, den zugeführten Luftstrom zumindest teilweise zu erzeugen.

Die Erfindung ermöglicht somit die Bereitstellung einer akkubetriebenen Bearbeitungsmaschine, bei der ein bereits als integraler Bestandteil eines zugeordneten Akkupacks vorgesehenes Lüfterrad zur Erzeugung des zugeführten Luftstroms Anwendung finden kann, sodass auch bei dieser Ausführungsform eine Bauraum- und Ressourcensparende Umsetzung der vorliegenden Erfindung ermöglicht wird.

Gemäss der Erfindung ist der zugeführte Luftstrom vom Antriebsmotor und/oder vom Akkupack angewärmt.

Hierdurch kann insbesondere ein Beschlagen der zugeordneten Erfassungseinheit wirksam verhindert werden.

Gemäß einer Ausführungsform ist der Antriebsmotor bestrombar, um ein Aufheizen des Antriebsmotors und/oder des Akkupacks zum Erwärmen des zugeführten Luftstroms zu ermöglichen.

Somit kann der Luftstrom auf einfache Art und Weise erwärmt werden.

Bevorzugt ist die Bearbeitungsmaschine nach Art eines autonomen Rasenmähers oder eines autonomen Staubsaugers ausgebildet.

Somit kann die Erfindung auf einfache Art und Weise bei unterschiedlichen Bearbeitungsmaschinen zur autonomen Bearbeitung eines zugeordneten Arbeitsbereichs Anwendung finden. Es wird jedoch darauf hingewiesen, dass ein autonomer Rasenmäher bzw. Staubsauger lediglich beispielhaften Charakter hat und nicht als Einschränkung der Erfindung zu verstehen ist, die auch bei anderen autonomen Arbeitsmaschinen Anwendung finden kann, z.B. bei einer autonomen Scheibenwischmaschine.

Darüber hinaus wird oben stehendes Problem gelöst durch eine Basisstation für eine mit einer Erfassungseinheit versehene Bearbeitungsmaschine zur autonomen Bearbeitung eines zugeordneten Arbeitsbereichs, wobei die Erfassungseinheit zur Erfassung von jeweils aktuellen Umgebungsparametern ausgebildet ist, die zur Steuerung der Bearbeitungsmaschine in einem zugeordneten Arbeitsbereich auswertbar sind, wobei eine Reinigungsvorrichtung vorgesehen ist, die zumindest dazu ausgebildet ist, eine Verschmutzung und/oder ein Beschlagen der Erfassungseinheit und/oder eine Kondensatbildung an der Erfassungseinheit zumindest zu reduzieren.

Die Erfindung ermöglicht somit die Bereitstellung einer Basisstation mit einer Reinigungsvorrichtung für eine Bearbeitungsmaschine, mit der eine Verschmutzung und/oder ein Beschlagen einer der Bearbeitungsmaschine zugeordneten Erfassungseinheit und/oder eine Kondensatbildung an dieser Erfassungseinheit vor und/oder nach dem Betrieb der Bearbeitungsmaschine auf einfache Art und Weise zumindest im Wesentlichen sicher und zuverlässig reduziert werden kann.

Vorzugsweise ist der Reinigungsvorrichtung mindestens ein Lüfter zur Erzeugung eines zumindest teilweise der Erfassungseinheit zuführbaren Luftstroms zugeordnet.

Somit kann die Erfassungseinheit sicher und zuverlässig gereinigt werden. Darüber hinaus kann eine effiziente Kühlung der Erfassungseinheit ermöglicht werden.

Gemäß einer Ausführungsform ist der Luftstrom zumindest dazu ausgebildet, ein Festsetzen von Schmutz- und/oder Wasserpartikeln auf der Erfassungseinheit der Bearbeitungsmaschine zumindest im Wesentlichen zu verhindern und/oder die Erfassungseinheit zumindest abschnittsweise zu kühlen.

Somit können eine Verschmutzung der Erfassungseinheit und deren thermische Beschädigung zumindest weitgehend verhindert werden.

Bevorzugt ist der Reinigungsvorrichtung mindestens ein Luftleitkanal zugeordnet, der dazu ausgebildet ist, den zumindest teilweise der Erfassungseinheit zuführbaren Luftstrom zur Erfassungseinheit zu leiten.

Somit kann der Luftstrom exakt und präzise zur Erfassungseinheit geleitet werden.

Vorzugsweise ist eine Bodenplatte vorgesehen, in der der Luftleitkanal angeordnet ist.

Somit kann der Luftleitkanal unkompliziert und sicher in der Basisstation angeordnet werden.

Bevorzugt ist der Reinigungsvorrichtung eine Wärmequelle zur Erzeugung von Wärme zugeordnet.

Somit kann auf einfache Art und Weise Wärme zumindest zur Reduzierung eines Beschlags der der Bearbeitungsmaschine zugeordneten Erfassungseinheit bereitgestellt werden.

Gemäß einer Ausführungsform ist eine Bodenplatte vorgesehen, in der die Wärmequelle angeordnet ist.

Somit kann die Wärmequelle sicher und zuverlässig in der Basisstation angeordnet werden.

Die Wärmequelle ist vorzugsweise nach Art einer Heizmatte ausgebildet.

Somit kann eine einfache und kompakte Wärmequelle bereitgestellt werden.

Die Wärmequelle ist bevorzugt zur Erwärmung des zumindest teilweise der Erfassungseinheit zuführbaren Luftstroms ausgebildet.

Somit kann auf einfache Art und Weise ein erwärmter Luftstrom bereitgestellt werden.

Vorzugsweise ist die Basisstation zur Bereitstellung von Energie für die Bearbeitungsmaschine ausgebildet, um zumindest ein Aufladen eines der Bearbeitungsmaschine zugeordneten Akkupacks zu ermöglichen.

Somit kann der Akkupack sicher und zuverlässig in der Basisstation aufgeladen werden.

Darüber hinaus wird oben stehendes Problem auch noch gelöst durch ein System, das zumindest aufweist: eine Bearbeitungsmaschine zur autonomen Bearbeitung eines zugeordneten Arbeitsbereichs, mit einer Erfassungseinheit zur Erfassung von jeweils aktuellen Umgebungsparametern, die zur Steuerung der Bearbeitungsmaschine im zugeordneten Arbeitsbereich auswertbar sind, und eine Basisstation für die Bearbeitungsmaschine, die zumindest dazu ausgebildet ist, eine Verschmutzung und/oder ein Beschlagen der Erfassungseinheit und/oder eine Kondensatbildung an der Erfassungseinheit zumindest zu reduzieren.

Die Erfindung ermöglicht somit auch die Bereitstellung eines Systems bestehend aus einer oben beschriebenen Bearbeitungsmaschine sowie einer oben beschriebenen Basisstation für die Bearbeitungsmaschine.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine perspektivische Ansicht einer Bearbeitungsmaschine zur autonomen Bearbeitung eines zugeordneten Arbeitsbereichs gemäß der vorliegenden Erfindung,
Fig. 2 eine schematische Ansicht der Bearbeitungsmaschine von Fig. 1, mit einer Erfassungseinheit und einer Freihalteeinrichtung gemäß einer ersten Ausführungsform,
Fig. 3 eine schematische Ansicht der Bearbeitungsmaschine von Fig. 1, mit der Erfassungseinheit von Fig. 2 und einer Freihalteeinrichtung gemäß einer zweiten Ausführungsform,
Fig. 4 eine schematische Ansicht der Bearbeitungsmaschine von Fig. 1, mit der Erfassungseinheit von Fig. 2 und einer Freihalteeinrichtung gemäß einer dritten Ausführungsform,
Fig. 5 eine schematische Ansicht der Bearbeitungsmaschine von Fig. 1, mit einer Erfassungseinheit gemäß einer zweiten Ausführungsform und einer Freihalteeinrichtung gemäß einer vierten Ausführungsform,
Fig. 6 eine schematische Ansicht der Bearbeitungsmaschine von Fig. 1, mit der Erfassungseinheit von Fig. 5 und einer Freihalteeinrichtung gemäß einer fünften Ausführungsform,
Fig. 7 eine schematische Ansicht der Bearbeitungsmaschine von Fig. 1, mit der Erfassungseinheit von Fig. 5 und einer Freihalteeinrichtung gemäß einer sechsten Ausführungsform,
Fig.8 eine schematische Ansicht der Bearbeitungsmaschine von Fig. 5 mit einer Basisstation gemäß einer ersten Ausführungsform,
Fig. 9 eine schematische Ansicht der Bearbeitungsmaschine von Fig. 7 mit der Basisstation von Fig. 8,
Fig. 10 eine schematische Ansicht der Bearbeitungsmaschine von Fig. 7, mit einer Freihalteeinrichtung gemäß einer siebten Ausführungsform, sowie der Basisstation von Fig. 8,
Fig. 11 eine schematische Ansicht der Bearbeitungsmaschine von Fig. 7 mit einer Basisstation gemäß einer zweiten Ausführungsform,
Fig. 12 eine schematische Ansicht der Bearbeitungsmaschine von Fig. 1, mit der Erfassungseinheit von Fig. 5 und einer Basisstation gemäß einer dritten Ausführungsform,
Fig. 13 eine schematische Ansicht der Bearbeitungsmaschine von Fig. 12 mit einer Basisstation gemäß einer vierten Ausführungsform, und
Fig. 14 eine schematische Ansicht der Bearbeitungsmaschine von Fig. 12 mit einer Basisstation gemäß einer fünften Ausführungsform.

### Beschreibung der Ausführungsbeispiele

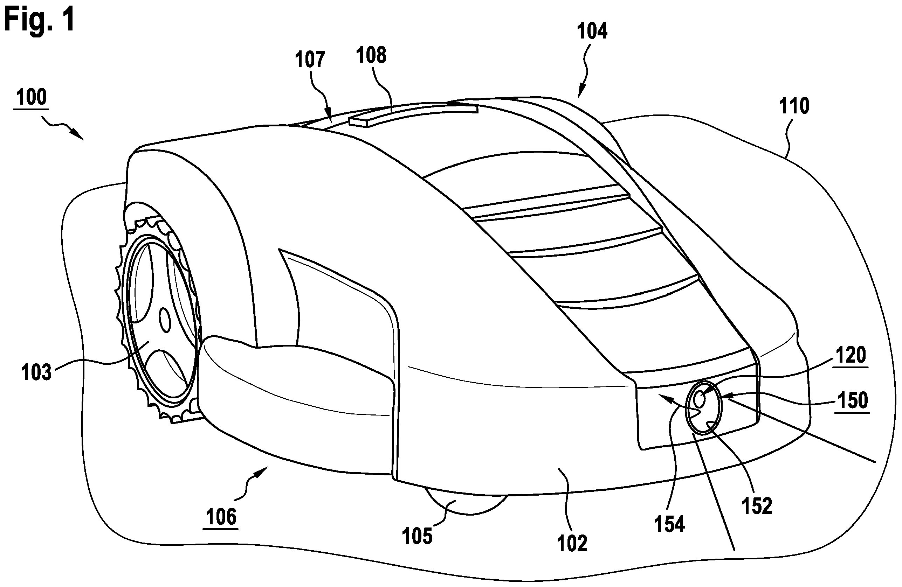

Fig. 1 zeigt eine beispielhafte Bearbeitungsmaschine 100 zur autonomen Bearbeitung eines zugeordneten Arbeitsbereichs 110 gemäß der vorliegenden Erfindung. Die Bearbeitungsmaschine 100 weist ein mit mindestens einer Lufteintrittsöffnung 107 versehenes Maschinengehäuse 102 auf, das z.B. über mindestens drei Räder und/oder Rollen 103, 104, 105 autonom in dem Arbeitsbereich 110 verfahrbar ist. Die Lufteintrittsöffnung 107 kann z.B. mit einem Gitter und/oder einem Filter versehen sein. Darüber hinaus weist die Bearbeitungsmaschine 100 eine Bearbeitungseinheit 106 zur Bearbeitung des Arbeitsbereichs 110 auf, die illustrativ über einen Ein-/Aus-Schalter 108 aktivierbar ist.

Es wird jedoch darauf hingewiesen, dass eine Aktivierung der Bearbeitungseinheit 106 durch eine Betätigung des Ein-/Aus-Schalters 108 lediglich beispielhaften Charakter hat und nicht als Einschränkung der Erfindung zu verstehen ist. Vielmehr kann die Bearbeitungseinheit 106 auch auf eine beliebige andere Art und Weise aktiviert werden, z.B. mittels einer Fernbedienung oder automatisch bei einem Einbringen der Bearbeitungsmaschine 100 in den zugeordneten Arbeitsbereich 110.

Die Bearbeitungsmaschine 100 weist bevorzugt mindestens eine am Maschinengehäuse 102 angeordnete Erfassungseinheit 120 zur Erfassung von jeweils aktuellen Umgebungsparametern auf, die vorzugsweise zumindest Lokalisierungs-, Arbeitsflächenerkennungs- und/oder Untergrunderkennungsparameter umfassen. Diese jeweils aktuellen Umgebungsparameter sind bevorzugt zumindest zur Steuerung der Bearbeitungsmaschine 100 im zugeordneten Arbeitsbereich 110 auswertbar, um hierzu z.B. Navigationsdaten und/oder geeignete Arbeitsflächen- bzw. Untergrundspezifische Bearbeitungsdaten zu bestimmen. Eine entsprechende Auswertung kann über eine geeignete Steuereinheit auf eine beliebige, auch dem Fachmann bekannte Art und Weise erfolgen und ist, ebenso wie die geeignete Steuereinheit, nicht Gegenstand der vorliegenden Erfindung. Deshalb wird hier zwecks Knappheit der Beschreibung auf eine eingehende Beschreibung hiervon verzichtet.

Gemäß einer Ausführungsform ist der Erfassungseinheit 120 mindestens eine Freihalteeinrichtung 150 zugeordnet. Diese ist bevorzugt zumindest dazu ausgebildet, im autonomen Betrieb der Bearbeitungsmaschine 100 eine betriebsbedingte Verschmutzung der Erfassungseinheit 120, ein Beschlagen der Erfassungseinheit 120 und/oder eine Kondensatbildung an der Erfassungseinheit 120 zumindest zu reduzieren und vorzugsweise im Wesentlichen vollständig zu verhindern. Hierzu weist die Freihalteeinrichtung 150 bevorzugt mindestens eine Luftleiteinrichtung 152 auf, die zumindest dazu ausgebildet ist, im Betrieb der Bearbeitungsmaschine 100 einen Luftstrom 154 in Richtung der Erfassungseinheit 120 zu leiten, der diese zumindest abschnittsweise umströmt.

Die Luftleiteinrichtung 152 umgreift die Erfassungseinheit 120 illustrativ ringförmig und bildet hierbei eine ringförmige Luftaustrittsöffnung im Bereich der Erfassungseinheit 120 aus. Alternativ hier kann die Luftleiteinrichtung 152 auch eine oder mehrere punktförmige Luftaustrittsöffnungen ausbilden.

Der Luftstrom 154 kann in eine beliebige Richtung über die Erfassungseinheit 120 geleitet werden. Darüber hinaus kann der Luftstrom 154 auch stoßartig über die Erfassungseinheit 120 geleitet werden, wozu z.B. an der Luftleiteinrichtung 152 ein geeignetes Ventil oder ein geeigneter Schieber vorgesehen sein können.

Illustrativ ist die Bearbeitungsmaschine 100 nach Art eines autonomen Rasenmähers ausgebildet und wird deshalb nachfolgend zur Vereinfachung der Beschreibung auch als "Mähroboter" bezeichnet. Bei diesem Mähroboter 100 ist die Bearbeitungseinheit 106 nach Art einer Rasenmähvorrichtung ausgebildet, wobei der zugeordnete Arbeitsbereich 110 eine Rasenfläche repräsentiert. Es wird jedoch darauf hingewiesen, dass der Mähroboter 100 lediglich beispielhaft zur Illustration einer möglichen Ausführung der vorliegenden Erfindung beschrieben ist und nicht zu deren Einschränkung. Diese kann vielmehr ganz allgemein bei autonomen Bearbeitungsmaschinen Anwendung finden, bei denen die Erfassungseinheit 120 verwendet wird, z.B. bei autonomen Staubsaugern, autonomen Scheibenwischmaschinen usw.

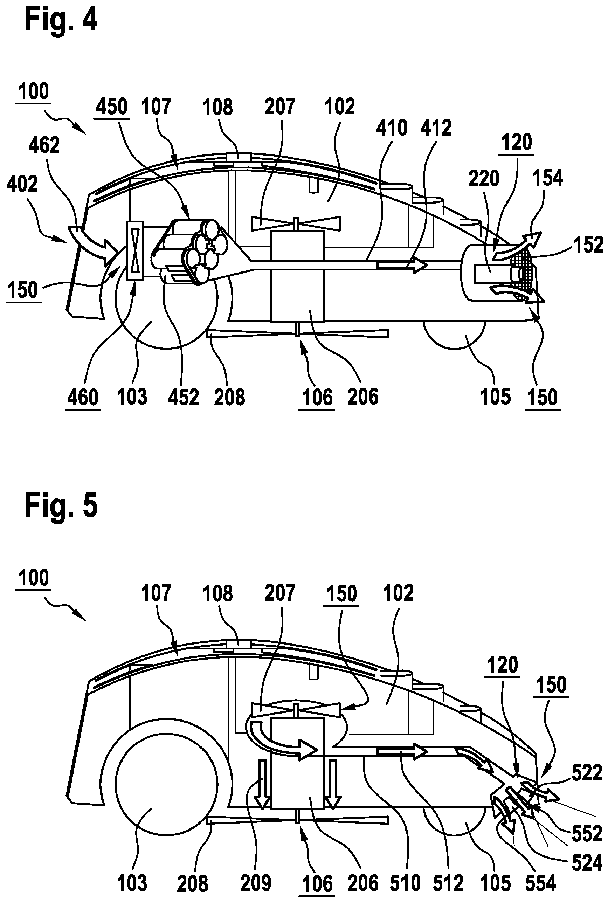

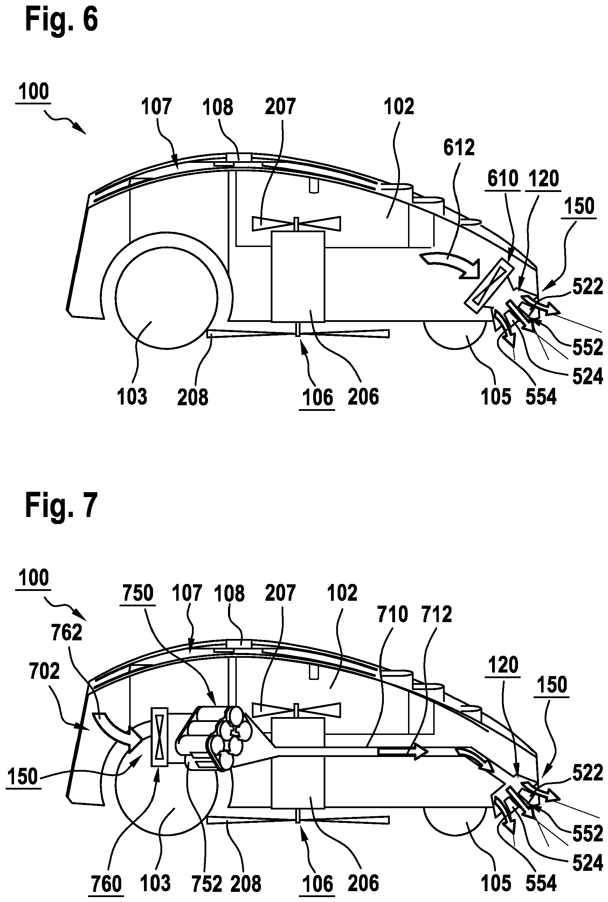

Der Mähroboter 100 ist bevorzugt akkubetrieben und mit einem geeigneten Akkupack versehen, wie bei Fig. 4 und 7 beschrieben. Es wird jedoch darauf hingewiesen, dass die vorliegende Erfindung nicht auf elektrisch angetriebene, und insbesondere akkubetriebene, Mähroboter beschränkt ist, sondern vielmehr ganz allgemein bei autonomen Bearbeitungsmaschinen Anwendung finden kann, unabhängig davon, ob diese elektrisch oder nicht-elektrisch antreibbar sind.

Fig. 2 zeigt den mit der Bearbeitungseinheit 106 versehenen Mähroboter 100 von Fig. 1. der wie bei Fig. 1 beschrieben das Maschinengehäuse 102 und die daran angeordnete Erfassungseinheit 120 aufweist. Diese ist gemäß einer ersten Ausführungsform nach Art einer Bilderfassungseinheit 220 ausgebildet, insbesondere nach Art einer Kamera. die bevorzugt zumindest teilweise in das Maschinengehäuse 102 integriert ist und in deren Bereich die mit der Luftleiteinrichtung 152 versehene Freihalteeinrichtung 150 von Fig. 1 vorgesehen ist.

Die Bearbeitungseinheit 106 ist wie bei Fig. 1 beschrieben nach Art einer Rasenmahvorrichtung ausgebildet und weist dementsprechend illustrativ ein oder mehrere Mähmesser 208 auf, zu deren Antrieb im autonomen Betrieb des Mähroboters 100 ein Antriebsmotor 206 vorgesehen ist. Diesem ist zur Motorkühlung mindestens ein Lüfterrad 207 zugeordnet, das z.B. durch die am Maschinengehause 102 vorgesehene Lufteintrittsöffnung 107 Luft ansaugen kann. um einen zumindest am Außenumfang des Antriebsmotors 206 vorbeiströmenden Kühlluftstrom 209 zu erzeugen.

Gemäß der ersten Ausführungsform ist eine Luftumlenkeinrichtung 210 vorgesehen die illustrativ im Maschinengehäuse 102 angeordnet ist und dazu ausgebildet ist. zumindest einen Teil eines vom Lüfterrad 207 erzeugten Luftstroms, bzw. einen Teil des Kühlluftstroms 209. zur Luftleiteinrichtung 152 der Freihalteeinrichtung 150 umzulenken. Hierdurch kann der Freihalteeinrichtung 150 im Betrieb des Mähroboters 100 ein mit 212 gekennzeichneter Luftstrom zugeführt werden. Deshalb ist das Lüfterrad 207 illustrativ auch der Freihalteeinrichtung 150 zugeordnet.

Im autonomen Betrieb des Mähroboters 100 erzeugt das Lüfterrad 207 zumindest teilweise den der Freihalteeinrichtung 150 zugeführten Luftstrom 212. Dieser wird von der Luftleiteinrichtung 152 zumindest teilweise als der Luftstrom 154 in Richtung der Kamera 220 geleitet, um diese zumindest bereichsweise zu umströmen und somit ein Festsetzen von Schmutz- und/oder Wasserpartikeln auf der Kamera 2 20 zumindest zu reduzieren und bevorzugt zumindest im Wesentlichen zu verhindern. Hierbei ist der der Freihalteeinrichtung 150 zugeführte Luftstrom 212 und somit der Luftstrom 154 bevorzugt vom Antriebsmotor 206 angewärmt und kann somit insbesondere ein Beschlagen der Kamera 220 wirksam verhindern.

Fig. 3 zeigt den mit der Bearbeitungseinheit 106 versehenen Mähroboter 100 von Fig. 1, der die Kamera 220 von Fig. 2 aufweist. Im Gegensatz zur ersten Ausführungsform von Fig. 2 weist die Freihalteeinrichtung 150 hierbei gemäß einer zweiten Ausführungsform ein separates Lüfterrad 310 zur zumindest teilweisen Erzeugung eines der Luftleiteinrichtung 152 zugeführten Luftstroms 312 auf, sodass auf eine Verwendung des Lüfterrads 207 von Fig. 2 verzichtet werden kann und dieses in der zweiten Ausführungsform somit optional ist.

Im autonomen Betrieb des Mähroboters 100 kann das Lüfterrad 310 zur Erzeugung des Luftstroms 312 z.B. Luft über die Lufteintrittsöffnung 107 des Maschinengehäuses 102 ansaugen. Der Luftstrom 312 wird von der Luftleiteinrichtung 152 zumindest teilweise als der Luftstrom 154 in Richtung der Kamera 220 geleitet, um diese zumindest bereichsweise zu umströmen. Hierbei kann der Luftstrom 154 die Kamera 220 zumindest abschnittsweise kühlen.

Fig. 4 zeigt den mit der Bearbeitungseinheit 106 versehenen Mähroboter 100 von Fig. 1, der die Kamera 220 von Fig. 2 aufweist. Illustrativ ist der Mähroboter 100 hier akkubetrieben und weist zur Stromversorgung im autonomen Betrieb mindestens ein Akkupack 450 auf, das beispielhaft mit einer Mehrzahl von Akkuzellen 452 versehen ist. Diesem Akkupack 450 ist zur Kühlung mindestens ein Lüfterrad 460 zugeordnet, das gemäß einer dritten Ausführungsform dazu ausgebildet ist, einen der Luftleiteinrichtung 152 zugeführten Luftstrom 412 zumindest teilweise zu erzeugen, sodass auf eine Verwendung des Lüfterrads 207 von Fig. 2 verzichtet werden kann und dieses in der dritten Ausführungsform somit optional ist. Deshalb ist das Lüfterrad 460 illustrativ auch der Freihalteeinrichtung 150 zugeordnet.

Im autonomen Betrieb des Mähroboters 100 kann das Lüfterrad 460 zur Erzeugung des Luftstroms 412 z.B. Luft über die Lufteintrittsöffnung 107 des Maschinengehäuses 102, oder eine zusätzliche daran vorgesehene Lufteintrittsöffnung 402, ansaugen, wie mit einem Pfeil 462 angedeutet. Der Luftstrom 412 wird z.B. über einen Luftleitkanal 410 der Luftleiteinrichtung 152 zugeführt und von dieser zumindest teilweise als der Luftstrom 154 in Richtung der Kamera 220 geleitet, um diese zumindest bereichsweise zu umströmen. Hierbei ist der Luftstrom 412 und somit der Luftstrom 154 bevorzugt vom Akkupack 450 angewärmt und kann somit insbesondere ein Beschlagen der Kamera 220 wirksam verhindern.

Fig. 5 zeigt den mit der bei Fig. 2 beschriebenen Bearbeitungseinheit 106 versehenen Mähroboter 100 von Fig. 1, der wie bei Fig. 1 beschrieben das Maschinengehäuse 102 und die daran angeordnete Erfassungseinheit 120 aufweist. Diese weist gemäß einer zweiten Ausführungsform mindestens einen und illustrativ zwei optische Sensoren 522, 524 auf, die bevorzugt zumindest teilweise in das Maschinengehäuse 102 integriert sind und in deren Bereich die mit einer alternativen Luftleiteinrichtung 552 versehene Freihalteeinrichtung 150 von Fig. 1 vorgesehen ist.

Gemäß einer vierten Ausführungsform ist eine Luftumlenkeinrichtung 510 vorgesehen, die illustrativ im Maschinengehäuse 102 angeordnet ist und dazu ausgebildet ist, zumindest einen Teil eines vom Lüfterrad 207 erzeugten Luftstroms, bzw. einen Teil des Kühlluftstroms 209, zur Luftleiteinrichtung 552 der Freihalteeinrichtung 150 umzulenken. Hierdurch kann der Freihalteeinrichtung 150 im Betrieb des Mähroboters 100 ein mit 512 gekennzeichneter Luftstrom zugeführt werden.

Im autonomen Betrieb des Mähroboters 100 erzeugt das Lüfterrad 207 zumindest teilweise den der Freihalteeinrichtung 150 zugeführten Luftstrom 512. Dieser wird von der Luftleiteinrichtung 552 zumindest teilweise als Luftstrom 554 in Richtung der optischen Sensoren 522, 524 geleitet, um diese zumindest bereichsweise zu umströmen und somit ein Festsetzen von Schmutz- und/oder Wasserpartikeln auf den optischen Sensoren 522, 524 zumindest zu reduzieren und bevorzugt zumindest im Wesentlichen zu verhindern. Hierbei ist der der Freihalteeinrichtung 150 zugeführte Luftstrom 512 und somit der Luftstrom 554 bevorzugt vom Antriebsmotor 206 angewärmt und kann somit insbesondere ein Beschlagen der optischen Sensoren 522, 524 wirksam verhindern.

Fig. 6 zeigt den Mähroboter 100 von Fig. 5, der die optischen Sensoren 522, 524 aufweist. Im Gegensatz zur vierten Ausführungsform von Fig. 5 weist die Freihalteeinrichtung 150 hierbei gemäß einer fünften Ausführungsform ein separates Lüfterrad 610 zur zumindest teilweisen Erzeugung eines der Luftleiteinrichtung 552 zugeführten Luftstroms 612 auf, sodass auf eine Verwendung des Lüfterrads 207 von Fig. 5 verzichtet werden kann und dieses in der fünften Ausführungsform somit optional ist.

Im autonomen Betrieb des Mähroboters 100 kann das Lüfterrad 610 zur Erzeugung des Luftstroms 612 z.B. Luft über die Lufteintrittsöffnung 107 des Maschinengehäuses 102 ansaugen. Der Luftstrom 612 wird von der Luftleiteinrichtung 552 zumindest teilweise als der Luftstrom 154 in Richtung der optischen Sensoren 522, 524 geleitet, um diese zumindest bereichsweise zu umströmen. Hierbei kann der Luftstrom 554 die optischen Sensoren 522, 524 zumindest abschnittsweise kühlen.

Fig. 7 zeigt den Mähroboter 100 von Fig. 5, der die optischen Sensoren 522, 524 von Fig. 5 aufweist. Illustrativ ist der Mähroboter 100 hier akkubetrieben und weist zur Stromversorgung im autonomen Betrieb mindestens ein Akkupack 750 auf, das beispielhaft mit einer Mehrzahl von Akkuzellen 752 versehen ist. Diesem Akkupack 750 ist zur Kühlung mindestens ein Lüfterrad 760 zugeordnet, das gemäß einer sechsten Ausführungsform dazu ausgebildet ist, einen der Luftleiteinrichtung 552 zugeführten Luftstrom 712 zumindest teilweise zu erzeugen, sodass auf eine Verwendung des Lüfterrads 207 von Fig. 5 verzichtet werden kann und dieses in der sechsten Ausführungsform somit optional ist. Deshalb ist das Lüfterrad 760 illustrativ auch der Freihalteeinrichtung 150 zugeordnet.

Im autonomen Betrieb des Mähroboters 100 kann das Lüfterrad 760 zur Erzeugung des Luftstroms 712 z.B. Luft über die Lufteintrittsöffnung 107 des Maschinengehäuses 102, oder eine zusätzliche daran vorgesehene Lufteintrittsöffnung 702, ansaugen, wie mit einem Pfeil 762 angedeutet. Der Luftstrom 712 wird z.B. über einen Luftleitkanal 710 der Luftleiteinrichtung 552 zugeführt und von dieser zumindest teilweise als der Luftstrom 554 in Richtung der optischen Sensoren 522, 524 geleitet, um diese zumindest bereichsweise zu umströmen. Hierbei ist der Luftstrom 712 und somit der Luftstrom 554 bevorzugt vom Akkupack 750 angewärmt und kann somit insbesondere ein Beschlagen der optischen Sensoren 522, 524 wirksam verhindern.

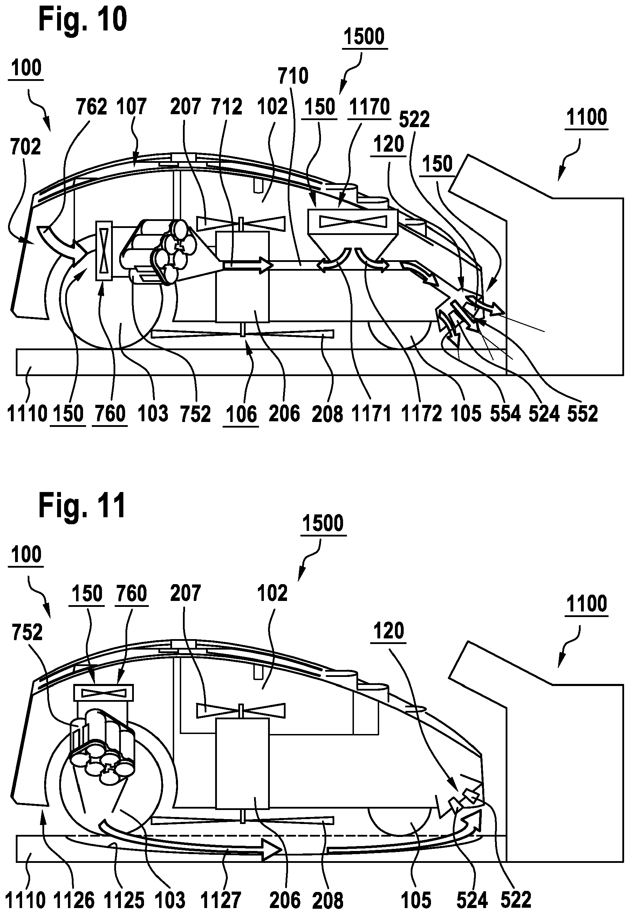

Darüber hinaus kann der Mähroboter 100 zur Detektion von Wasserpartikeln auf der Erfassungseinheit 120 bzw. den optischen Sensoren 522, 524 vorzugsweise eine Feuchtigkeitserkennungseinrichtung aufweisen. Diese kann z.B. nach Art eines Temperatursensors und/oder eines Regensensors ausgebildet sein. Optional können die optischen Sensoren 522, 524 ein Beschlagen z.B. durch kein, ein sehr schwaches oder ein sehr untypisches Signal vom Sender zum Empfänger selbst erkennen. Ebenfalls können die optischen Sensoren 522, 524 verfälschte Messwerte ausgeben, wenn ihre Temperatur im Betrieb zu hoch ist. Um dies zumindest weitgehend zu verhindern, ist der Mähroboter 100 bzw. die Freihalteeinrichtung 150 des Mähroboters 100 gemäß einer sieben Ausführungsform mit einem Lüfterrad (1170 in Fig. 10) zur Erzeugung eines Kühlluftstroms (1171, 1172 in Fig. 10), z.B. bei hohen Umgebungstemperaturen, wie dies beispielsweise im Hochsommer der Fall sein kann, versehen. Dieser Kühlluftstrom (1171, 1172 in Fig. 10) ist bevorzugt zur Kühlung der optischen Sensoren 522, 524 und/oder des Antriebsmotors 206 und/oder des Akkupacks 750 und/oder einem beliebig anderen temperaturempfindlichen Teil des Mähroboters 100 ausgebildet.

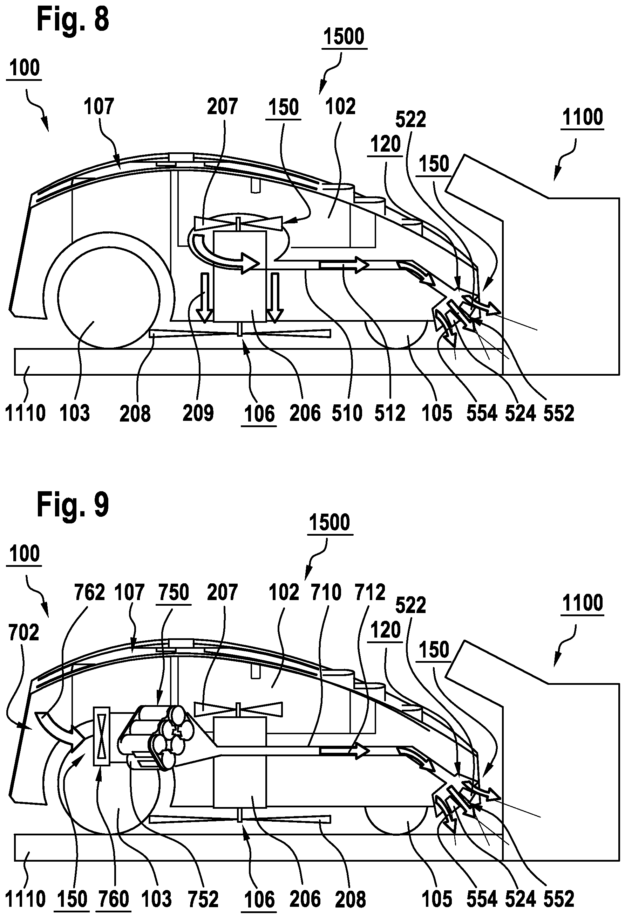

Gemäß einer Ausführungsform können darüber hinaus auf den optischen Sensoren 522, 524 auftretende Wasserpartikel durch einen zusätzlichen Reinigungsvorgang zumindest teilweise reduziert werden. Hierfür ist der Antriebsmotor 206 des Mähroboters 100 bevorzugt derart ausgebildet, dass dieser bevorzugt ohne eine Inbetriebnahme des Mähroboters 100 bestrombar ist, um ein Aufheizen des Antriebsmotors 206 und/oder des Akkupacks 450, 750 zum Erwärmen des zugeführten Luftstroms 212, 412 zu ermöglichen. Bei diesem Vorgang pausiert der Mähroboter 206 und der Antriebsmotor 206 wird gezielt bestromt, z.B. kann eine dem Antriebsmotor 206 zugeordnete Motoren-Endstufe durch langsames Umschalten erwärmt werden. Optional kann die Erwärmung des Antriebsmotors 206 durch eine Bremsbestromung, bei der der Antriebsmotor 206 durch konstante schnelle Umpolung der Motor-Drehrichtung erwärmt wird, erzeugt werden. Die erzeugte Wärme kann anschließend mit Hilfe des dem Antriebsmotor 206 zugeordneten Lüfterrads 207 zu den optischen Sensoren 522, 524 geleitet werden und somit die auftretenden Wasserpartikel zumindest reduzieren. Es wird darauf hingewiesen, dass die Bestromung nicht auf den Antriebsmotor 206 beschränkt ist, sondern vielmehr an einem beliebigen, dem Mähroboter 100 zugeordneten Motor erfolgen kann, z.B. an einem Radantriebsmotor. Darüber hinaus kann optional oder zusätzlich eine Bestromung bzw. ein Reinigungsvorgang der optischen Sensoren 522, 524 im zugewiesenen Arbeitsbereich 110 des Mähroboters 100 oder in einer Basisstation (1100 in Fig. 9) erfolgen.

Fig. 8 zeigt den in einer Basisstation 1100 in einer beispielhaften Park- und/oder Aufladeposition, die nachfolgend der Einfachheit halber nur noch als Parkposition bezeichnet wird, angeordneten Mähroboter 100 von Fig. 5. Der Mähroboter 100 und die Basisstation 1100 bilden dabei bevorzugt ein System 1500 aus.

Vorzugsweise ist der Mähroboter 100 zwischen zwei Arbeitsvorgängen in der Basisstation 1100 angeordnet bzw. geparkt. Dabei kann der Akkupack 750 bevorzugt aufgeladen werden und/oder die optischen Sensoren 522, 524 gereinigt werden. Hierzu können eine Verschmutzung und/oder Wasserpartikel auf den optischen Sensoren 522, 524 optional wie oben beschrieben z.B. über einen Temperatursensor und/oder einen Regensensor erkannt werden. Alternativ oder zusätzlich hierzu kann die Basisstation 1100 an ihrer Bodenplatte 1110 im Bereich der optischen Sensoren 522, 524 eine Reflektorfläche mit einer bekannten Reflektanz aufweisen, über die eine Verschmutzung und/oder Wasserpartikel auf den optischen Sensoren 522, 524 ermittelt werden können.

In Fig. 8 wird eine derartige Verschmutzung und/oder ein Beschlagen der optischen Sensoren 522, 524 beispielhaft mit Hilfe der vom Antriebsmotor 206 erzeugten Wärme, die beispielhaft analog zu Fig. 5 mit einem Lüfterrad 207 zu den optischen Sensoren 522, 524 geleitet wird, zumindest reduziert. Zur Erzeugung von Wärme ist der Antriebsmotor 206 derart ausgebildet, dass er analog zum autonomen Betrieb in der Parkposition betrieben werden kann oder analog zu Fig. 7 bestromt werden kann. Hierzu kann der Antriebsmotor 206 wahlweise über den Akkupack 750 des Mähroboters 100 oder über die Basisstation 1100, die bevorzugt zur Bereitstellung von Energie für den Mähroboter 100 ausgebildet ist, versorgt werden.

Fig. 9 zeigt den in der Basisstation 1100 von Fig. 8 parkenden Mähroboter 100 von Fig. 7. Analog zu Fig. 7 wird eine Verschmutzung und/oder ein Beschlagen der Erfassungseinheit 120 mit Hilfe der vom Akkupack 750 des Mähroboters 100 erzeugten und mit dem Lüfterrad 760 zumindest teilweise zu den optischen Sensoren 522, 524 geleiteten Wärme zumindest reduziert. Dabei wird der Akkupack 750 vorzugsweise über einen gezielten Aufladevorgang, der vorzugsweise vor dem folgenden Arbeitsvorgang des Mähroboters 100 beendet bzw. vervollständigt ist, erwärmt. Alternativ hierzu kann der Akkupack 750 auch über ein gezieltes Überladen, das z.B. kurz vor dem folgenden Arbeitsvorgang des Mähroboters 100 beendet ist und im nicht akku-schädigenden Bereich ausgeführt wird, erwärmt werden.

Fig. 10 zeigt den in der Basisstation 1100 von Fig. 8 parkenden Mähroboter 100 von Fig. 7 mit einer gemäß der siebten Ausführungsform ausgebildeten Freihalteeinrichtung 150, bei der illustrativ zwischen dem Akkupack 750 und den optischen Sensoren 522, 524 ein Lüfterrad 1170 zur Erzeugung eines bevorzugt in dem Luftleitkanal 710 geleiteten Kühlluftstroms 1171, 1172 angeordnet ist. Dieses Lüfterrad 1170 kann optional oder zusätzlich z.B. bei und/oder vor einem Betrieb in warmen bzw. heißen Umgebungstemperaturen, z. B. an Hochsommertagen, zur Kühlung des Akkupacks 750 und/oder zur Kühlung der optischen Sensoren 522, 524 Anwendung finden, damit eine bei derart hohen Temperaturen mögliche Verfälschung von Messwerten verhindert werden kann.

Fig. 11 zeigt den Mähroboter 100 von Fig. 7 in der Basisstation 1100 von Fig. 8, die gemäß einer zweiten Ausführungsform einen Luftleitkanal 1125 aufweist. Vorzugsweise ist der Luftleitkanal 1125 in der Bodenplatte 1110 der Basisstation 1100 angeordnet und leitet einen analog zum Luftstrom 712 von Fig. 7 erwärmten Luftstrom 1127 bevorzugt zumindest teilweise zu den optischen Sensoren 522, 524. Gemäß einer Ausführungsform wird der Luftstrom 1127 hierzu an einer Unterseite 1126 des Mähroboters 100 vorzugsweise im Bereich eines Rades 103, 104, 105 des Mähroboters 100 ausgeleitet und über den Luftleitkanal 1127 zu den optischen Sensoren 522, 524 geleitet.

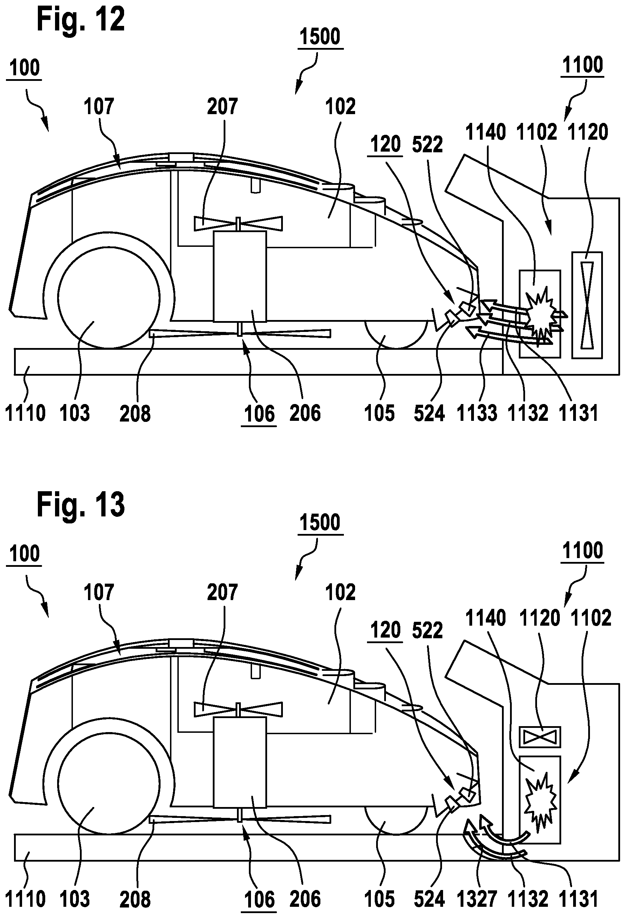

Fig. 12 zeigt den Mähroboter 100 mit der Erfassungseinheit 120 von Fig. 5 und der Basisstation 1100 von Fig. 8, die gemäß einer dritten Ausführungsform eine Reinigungsvorrichtung 1102 aufweist. Die Reinigungsvorrichtung 1102 ist zumindest dazu ausgebildet, eine Verschmutzung und/oder ein Beschlagen der optischen Sensoren 522, 524 und/oder eine Kondensatbildung an den optischen Sensoren 522, 524 zumindest zu reduzieren.

Hierzu weist die Reinigungsvorrichtung 1102 bevorzugt mindestens einen Lüfter 1120 zur Erzeugung eines zumindest teilweise den optischen Sensoren 522, 524 zuführbaren Luftstroms 1131, 1132, 1133 auf. Dieser Luftstrom 1131, 1132, 1133 ist zumindest dazu ausgebildet, ein Festsetzen von Schmutz- und/oder Wasserpartikeln auf den optischen Sensoren 522, 524 des Mähroboters 100 zumindest im Wesentlichen zu verhindern und/oder die optischen Sensoren 522, 524 zumindest abschnittsweise zu kühlen.

Darüber hinaus weist die Reinigungsvorrichtung 1102 bevorzugt eine Wärmequelle 1140 zur Erzeugung von Wärme auf. Diese Wärmequelle 1140 ist vorzugsweise zur Erwärmung des zumindest teilweise den optischen Sensoren 522, 524 zuführbaren Luftstroms 1131, 1132, 1133 ausgebildet und bevorzugt im Bereich der optischen Sensoren 522, 524 angeordnet.

Fig. 13 zeigt den Mähroboter 100 mit der Erfassungseinheit 120 von Fig. 5 und der Basisstation 1100 von Fig. 12. Gemäß einer Ausführungsform wird der zumindest teilweise den optischen Sensoren 522, 524 zuführbare Luftstrom 1131, 1132 in Fig. 13 analog zum mindestens einen Luftleitkanal 1125 von Fig. 11 über mindestens einen vorzugsweise in der Bodenplatte 1110 der Basisstation 1100 angeordneten Luftleitkanal 1327 zur Erfassungseinheit 120 geleitet.

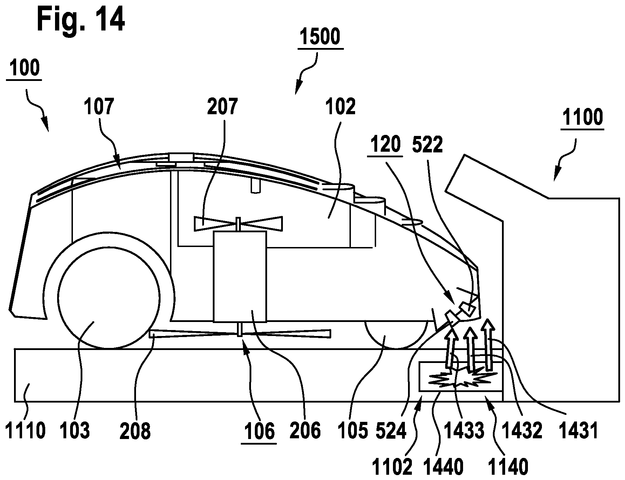

Fig. 14 zeigt den Mähroboter 100 mit der Erfassungseinheit 120 von Fig. 5 und der Basisstation 1100 von Fig. 8, die gemäß einer vierten Ausführungsform eine in der Bodenplatte 1110 der Basisstation 1100 angeordnete Wärmequelle 1140 aufweist. Vorzugsweise ist die Wärmequelle 1140 dazu ausgebildet aufsteigende Wärme 1431, 1432, 1433 zu erzeugen, die zumindest eine Verschmutzung und/oder Kondensatbildung an den optischen Sensoren 522, 524 reduziert. Darüber hinaus kann eine Erwärmung der Bodenplatte 1110 im Bereich des Akkupacks 750 erfolgen, durch die die vom Mähroboter 100 nutzbare Akkukapazität des Akkupacks 750 bevorzugt erhöht werden kann. Gemäß einer Ausführungsform ist die Wärmequelle 1140 als Heizmatte 1440 ausgebildet.

Es wird darauf hingewiesen, dass bei Fig. 2 bis 14 die Erfassungseinheit 120 jeweils entweder mit einer Bilderfassungseinheit, insbesondere einer Kamera, oder mit optischen Sensoren realisiert wird. Die Erfindung ist jedoch nicht auf derartige Erfassungseinheiten beschränkt, sondern kann bei einer Vielzahl anderer Erfassungseinheiten Anwendung finden, z.B. bei ToF-(Time of Flight) Kameras, Ultraschallsensoren, Lasersensoren, Beleuchtungselementen wie LEDs usw.

Darüber hinaus wird darauf hingewiesen, dass die unterschiedlichen Ausführungsformen der Bearbeitungsmaschine 100 und/oder der Basisstation 1100 auch beliebig miteinander kombinierbar sind.

## Patentansprüche

1. Bearbeitungsmaschine (100) zur autonomen Bearbeitung eines zugeordneten Arbeitsbereichs (110), mit einer Erfassungseinheit (120) zur Erfassung von jeweils aktuellen Umgebungsparametern, die zur Steuerung der Bearbeitungsmaschine (100) im zugeordneten Arbeitsbereich (110) auswertbar sind, **dadurch gekennzeichnet, dass** der Erfassungseinheit (120) eine Freihalteeinrichtung (150) zugeordnet ist, die zumindest dazu ausgebildet ist, im autonomen Betrieb der Bearbeitungsmaschine (100) eine betriebsbedingte Verschmutzung und/oder ein Beschlagen der Erfassungseinheit (120) und/oder eine Kondensatbildung an der Erfassungseinheit (120) zumindest zu reduzieren, wobei die Freihalteeinrichtung (150) mindestens eine Luftleiteinrichtung (152, 552) aufweist, der zumindest im autonomen Betrieb der Bearbeitungsmaschine (100) ein Luftstrom (154, 212, 312, 412, 554, 612, 712) zugeführt wird, wobei die Luftleiteinrichtung (152, 552) dazu ausgebildet ist, den zugeführten Luftstrom (154, 212, 312, 412, 554, 612, 712) zumindest teilweise in Richtung der Erfassungseinheit (120) zu leiten, wobei zum Antrieb im autonomen Betrieb der Bearbeitungsmaschine (100) ein Antriebsmotor (206) vorgesehen ist, dem zur Motorkühlung mindestens ein Lüfterrad (207) zugeordnet ist, das dazu ausgebildet ist, den zugeführten Luftstrom (212) zumindest teilweise zu erzeugen und/oder wobei zur Stromversorgung im autonomen Betrieb der Bearbeitungsmaschine (100) mindestens ein Akkupack (450) vorgesehen ist, dem zur Kühlung mindestens ein Lüfterrad (460) zugeordnet ist, das dazu ausgebildet ist, den zugeführten Luftstrom (412) zumindest teilweise zu erzeugen.

2. Bearbeitungsmaschine nach Anspruch 1, **dadurch gekennzeichnet, dass** die Erfassungseinheit (120) mindestens eine Kamera (220) und/oder mindestens einen optischen Sensor (522, 524) aufweist.

3. Bearbeitungsmaschine nach Anspruch 1 oder 2, **dadurch gekennzeichnet, dass** die Umgebungsparameter Lokalisierungs-, Arbeitsflächenerkennungs- und/oder Untergrunderkennungsparameter aufweisen.

4. Bearbeitungsmaschine nach einem der vorhergehenden Ansprüche,
**dadurch gekennzeichnet, dass** der zumindest teilweise in Richtung der Erfassungseinheit (120) geleitete Luftstrom (154, 212, 312, 412, 554, 612, 712) zumindest dazu ausgebildet ist, ein Festsetzen von Schmutz- und/oder Wasserpartikeln auf der Erfassungseinheit (120) zumindest im Wesentlichen zu verhindern und/oder die Erfassungseinheit (120) zumindest abschnittsweise zu kühlen.

5. Bearbeitungsmaschine nach einem der vorhergehenden Ansprüche,
**dadurch gekennzeichnet, dass** die Freihalteeinrichtung (150) mindestens ein Lüfterrad (310) zur Erzeugung des zugeführten Luftstroms (312) aufweist.

6. Bearbeitungsmaschine nach einem der vorhergehenden Ansprüche,
**dadurch gekennzeichnet, dass** der zugeführte Luftstrom (212; 412) vom Antriebsmotor (206) und/oder vom Akkupack (450) angewärmt ist.

7. Bearbeitungsmaschine nach einem der vorhergehenden Ansprüche,
**dadurch gekennzeichnet, dass** der Antriebsmotor (206) bestrombar ist, um ein Aufheizen des Antriebsmotors(206) und/oder des Akkupacks (450) zum Erwärmen des zugeführten Luftstroms (212; 412) zu ermöglichen.

8. Bearbeitungsmaschine nach einem der vorhergehenden Ansprüche, die nach Art eines autonomen Rasenmähers oder eines autonomen Staubsaugers ausgebildet ist.

## Claims

1. Machining device (100) for autonomously machining an associated working area (110), comprising a detection unit (120) for detecting respectively current environmental parameters which can be evaluated for controlling the machining device (100) in the associated working area (110), **characterized in that** a keep-free device (150) is associated with the detection unit (120), which keep-free device is at least designed to at least reduce operation-related soiling of and/or impacts on the detection unit (120) and/or formation of condensation on the detection unit (120), wherein the keep-free device (150) has at least one air-guiding device (152, 552) to which an air stream (154, 212, 312, 412, 554, 612, 712) is supplied at least during autonomous operation of the machining device (100), wherein the air-guiding device (152, 552) is designed to guide the supplied air stream (154, 212, 312, 412, 554, 612, 712) at least partially in the direction of the detection unit (120), wherein a drive motor (206) is provided for driving during autonomous operation of the machining device (100), at least one fan impeller (207) being associated with the said drive motor, which fan impeller is designed to at least partially generate the supplied air stream (212), and/or wherein at least one rechargeable battery pack (450) is provided for power supply during autonomous operation of the machining device (100), at least one fan impeller (460) being associated with the said rechargeable battery pack for cooling purposes, which fan impeller is designed to at least partially generate the supplied air stream (412).

2. Machining device according to Claim 1, **characterized in that** the detection unit (120) has at least one camera (220) and/or at least one optical sensor (522, 524).

3. Machining device according to Claim 1 or 2, **characterized in that** the environmental parameters have localization, working area identification and/or ground identification parameters.

4. Machining device according to one of the preceding claims, **characterized in that** the air stream (154, 212, 312, 412, 554, 612, 712) which is guided at least partially in the direction of the detection unit (120) is at least designed to at least substantially prevent particles of dirt and/or water settling on the detection unit (120) and/or to cool the detection unit (120) at least in sections.

5. Machining device according to one of the preceding claims, **characterized in that** the keep-free region (150) has at least one fan impeller (310) for generating the supplied air stream (312).

6. Machining device according to one of the preceding claims, **characterized in that** the supplied air stream (212; 412) is warmed by the drive motor (206) and/or by the rechargeable battery pack (450).

7. Machining device according to one of the preceding claims, **characterized in that** the drive motor (206) can be energized in order to allow the drive motor (206) and/or the rechargeable battery pack (450) to be heated up in order to warm up the supplied air stream (212; 412) .

8. Machining device according to one of the preceding claims, which is designed in the form of an autonomous lawnmower or an autonomous vacuum cleaner.

## Revendications

1. Machine de traitement (100) pour le traitement autonome d'une zone de travail attribuée (110), comprenant une unité d'acquisition (120) pour acquérir des paramètres d'environnement respectivement actuels qui peuvent être évalués pour commander la machine de traitement (100) dans la zone de travail attribuée (110), **caractérisée en ce qu'**à l'unité d'acquisition (120) est attribué un dispositif de dégagement (150) qui est réalisé au moins pour au moins réduire un encrassement et/ou une formation de buée sur l'unité d'acquisition (120), lié(e) au fonctionnement, et/ou une formation de condensation sur l'unité d'acquisition (120) au cours du fonctionnement autonome de la machine de traitement (100), dans laquelle le dispositif de dégagement (150) présente au moins un dispositif de déflexion d'air (152, 552) auquel un courant d'air (154, 212, 312, 412, 554, 612, 712) est amené au moins au cours du fonctionnement autonome de la machine de traitement (100), dans laquelle le dispositif de déflexion d'air (152, 552) est réalisé pour conduire le courant d'air amené (154, 212, 312, 412, 554, 612, 712) au moins en partie dans la direction de l'unité d'acquisition (120), dans laquelle, pour l'entraînement au cours du fonctionnement autonome de la machine de traitement (100), un moteur d'entraînement (206) est prévu auquel est attribuée au moins une roue de ventilateur (207) pour le refroidissement du moteur et qui est réalisée pour produire au moins en partie le courant d'air amené (212), et/ou dans laquelle au moins un bloc-batterie (450) est prévu pour l'alimentation électrique au cours du fonctionnement autonome de la machine de traitement (100) et auquel au moins une roue de ventilateur (460) est attribuée pour le refroidissement et qui est réalisée pour produire au moins en partie le courant d'air amené (412).

2. Machine de traitement selon la revendication 1, **caractérisée en ce que** l'unité d'acquisition (120) présente au moins une caméra (220) et/ou au moins un capteur optique (522, 524).

3. Machine de traitement selon la revendication 1 ou 2, **caractérisée en ce que** les paramètres d'environnement présentent des paramètres de localisation, de reconnaissance de surface de travail et/ou de reconnaissance du terrain.

4. Machine de traitement selon l'une quelconque des revendications précédentes, **caractérisée en ce que** le courant d'air (154, 212, 312, 412, 554, 612, 712) amené au moins en partie dans la direction de l'unité d'acquisition (120) est au moins réalisé pour empêcher au moins substantiellement un blocage de particules de saleté et/ou d'eau sur l'unité d'acquisition (120) et/ou pour refroidir l'unité d'acquisition (120) au moins par endroits.

5. Machine de traitement selon l'une quelconque des revendications précédentes, **caractérisée en ce que** le dispositif de dégagement (150) présente au moins une roue de ventilateur (310) pour produire le courant d'air amené (312).

6. Machine de traitement selon l'une quelconque des revendications précédentes, **caractérisée en ce que** le courant d'air amené (212 ; 412) est réchauffé par le moteur d'entraînement (206) et/ou par le bloc-batterie (450) .

7. Machine de traitement selon l'une quelconque des revendications précédentes, **caractérisée en ce que** le moteur d'entraînement (206) peut être alimenté en courant pour permettre un chauffage du moteur d'entraînement (206) et/ou du bloc-batterie (450) pour réchauffer le courant d'air amené (212 ; 412).

8. Machine de traitement selon l'une quelconque des revendications précédentes qui est réalisée à la manière d'une tondeuse à gazon autonome ou d'un aspirateur autonome.
